Europäisches Patentamt

European Patent Office

Office européen des brevets

(19)

(11) Veröffentlichungsnummer : **0 188 714**
**B1**

(12) **EUROPÄISCHE PATENTSCHRIFT**

(45) Veröffentlichungstag der Patentschrift :
**17.05.89**

(21) Anmeldenummer : **85115370.0**

(22) Anmeldetag : **04.12.85**

(51) Int. Cl.⁴ : **A 47 J 27/62**, G 05 D 23/19

(54) **Vorrichtung zum Steuern des Gar- bzw. Kochvorganges in einem Dampfdruckkochgefäss.**

(30) Priorität : **24.12.84 DE 3447296**

(43) Veröffentlichungstag der Anmeldung :
**30.07.86 Patentblatt 86/31**

(45) Bekanntmachung des Hinweises auf die Patenterteilung : **17.05.89 Patentblatt 89/20**

(84) Benannte Vertragsstaaten :
**AT BE CH FR GB IT LI LU NL SE**

(56) Entgegenhaltungen :
**EP-A- 0 074 108**
**EP-A- 0 127 785**
**DE-A- 3 026 620**
**GB-A- 2 114 321**

(73) Patentinhaber : **FISSLER GMBH**
**Im Wörth 2 Postfach 12 23 20**
**D-6580 Idar-Oberstein 2 (DE)**

(72) Erfinder : **Andre, Wolfram**
**Ginsterweg 32**
**D-7547 Wildbad (DE)**
Erfinder : **Wolf, Kurt**
**Langwiesenweg 71**
**D-7547 Wildbad (DE)**

(74) Vertreter : **Vogel, Georg**
**Hermann-Essig-Strasse 35**
**D-7141 Schwieberdingen (DE)**

EP 0 188 714 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Vorrichtung zum Steuern des Gar- bzw. Kochvorganges in einem über ein elektrisches Heizelement mit Steuerschaltung aufheizbaren und mit Wasser und/oder Kochgut gefüllten Dampfdruckkochgefäß, bei der die Temperatur im bzw. am Dampfdruckkochgefäß mittels eines Temperaturfühlers und über eine Temperaturmeßeinrichtung der Steuerschaltung zur Regelung der Heizleistung des Heizelementes zugeführt wird, bei der mittels eines einstellbaren Zeitgliedes eine Gar- bzw. Kochzeit vorgebbar ist, das erst mit dem Erreichen einer vorgegebenen Temperatur die zwischen der vorgegebenen Gar- bzw. Kochtemperatur und der Verdampfungstemperatur des Wassers im Dampfdruckkochtopf liegt, mit der Abmessung der vorgegebenen Gar- bzw. Kochzeit beginnt, bei der in der Aufheizphase mittels eines Differenziergliedes der Anstieg der Temperatur-Zeit-Kennlinie des gesamten Systems erfaßt wird, bei der mittels einer Zeitmeßeinrichtung die Zeitdauer, die vom Erreichen der Temperatur des Beginns der Dampfphase bis zum Erreichen der Verdampfungstemperatur des Wassers im Dampfdruckkochgefäß verstreicht, gemessen wird und bei der die vorgegebene Gar- bzw. Kochzeit in Abhängigkeit von dem erfaßten Anstieg der Temperatur-Zeit-Kennlinie und/oder der ermittelten Zeitdauer durch vorzeitige Abschaltung des Heizelementes im Dampfdruckkochgefäß eingehalten wird, wobei die Abschaltung um so früher erfolgt, je kleiner der erfaßte Anstieg und/oder je größer die ermittelte Zeitdauer sind.

Eine Vorrichtung dieser Art ist durch die Patentanmeldung P 33 23 399.3 in der Bundesrepublik Deutschland der Anmelderin bekannt. Die Erfassung des Anstieges der Temperatur-Zeit-Kennlinie und die Ermittlung der Zeitdauer, die vom Erreichen der Temperatur des Beginns der Dampfphase bis zum Erreichen der Verdampfungstemperatur des Wassers im Dampfdruckkochgefäß verstreicht, ermöglichen ein energiesparendes Garen bzw. Kochen, da damit die Trägheit des gesamten Systems abhängig vom Inhalt im Dampfdruckkochgefäß optimal zur vorzeitigen Abschaltung des Heizelementes ausgenützt werden kann. Es wird aber in jedem Falle sichergestellt, daß im Dampfdruckkochgefäß die für das Garen bzw. Kochen ausreichende Temperatur für die vorgegebene Gar- bzw. Kochzeit eingehalten wird.

Diese bekannte Vorrichtung hat den Nachteil, daß die Energieeinsparung nur möglich ist, wenn der Gar- bzw. Kochvorgang ohne Unterbrechung abläuft. Vielfach ist es aber erwünscht, einen Gar- bzw. Kochvorgang für die Zugabe von weiterem Kochgut zu unterbrechen. Es sei nur an die Zugabe von Gar- bzw. Kochgut nach einer ersten Gar- bzw. Kochphase hingewiesen, das nur einer kürzeren Gar- bzw. Kochzeit ausgesetzt werden soll.

Es ist Aufgabe der Erfindung, eine Vorrichtung der eingangs erwähnten Art zu schaffen, bei der ein Gar- bzw. Kochvorgang in mehreren Gar- bzw. Kochphasen ablaufen kann, ohne daß durch die dabei auftretenden Unterbrechungen die Möglichkeit des energiesparenden Garens bzw. Kochens durch eine vorzeitige Abschaltung des Heizelementes und Einhaltung der vorgegebenen Gar- bzw. Kochzeit im Dampfdruckkochgefäß verloren geht.

Die Erfindung löst diese Aufgabe dadurch, daß über einen Betriebsartenschalter der Steuerschaltung Schaltmaßnahmen zugeführt sind, die den Gar- bzw. Kochvorgang in mehrere, aufeinander folgende Gar- bzw. Kochphasen unterteilen, daß die Steuerschaltung für die Dauer dieser Schaltmaßnahmen durch Abschaltung des Heizelementes den Gar- bzw. Kochvorgang unterbricht, daß die Steuerschaltung nach der ersten Gar- bzw. Kochphase eines Gar- bzw. Kochvorganges den erfaßten Anstieg der Temperatur-Zeit-Kennlinie und die ermittelte Zeitdauer aus der Aufheizphase bis zur endgültigen Abschaltung des Systems speichert, und daß über diese in der Steuerschaltung gespeicherten Werte auch in nachfolgenden Gar- bzw. Kochphasen das Heizelement zur Einhaltung der jeweils vorgegebenen Gar- bzw. Kochzeit im Dampfdruckkochgefäß vorzeitig abschaltbar ist.

Mit der zusätzlichen Schaltmaßnahme wird eine neue Betriebsart eingeführt, in der der Gar- bzw. Kochvorgang unterbrochen wird, die Werte aus der Aufheizphase werden aber nach der ersten Gar- bzw. Kochphase bis zur endgültigen Abschaltung des Systems gespeichert, so daß sie jederzeit wieder für eine vorzeitige Abschaltung des Heizelementes in nachfolgenden Gar- bzw. Kochphasen zur Verfügung stehen. Vielfach ist eine Unterbrechung zwischen zwei Gar- bzw. Kochphasen so kurz, daß kein merkliches Absinken der Temperatur im Dampfdruckkochgefäß auftritt. Die Vorgeschichte der Aufheizphase bleibt aber in jedem Fall erhalten und kann zu beliebiger Zeit für ein energiesparendes Garen bzw. Kochen in nachfolgenden Gar- bzw. Kochphasen ausgenützt werden.

Für das Garen bzw. Kochen unter Dampf in einem Dampfdruckkochgefäß hat sich eine Ausgestaltung für vollkommen ausreichend erwiesen, die dadurch gekennzeichnet ist, daß mittels einer Temperaturwähleinrichtung eine Temperatur für Schnellgaren bzw. -kochen und eine Temperatur für Biogaren vorgebbar sind. Dabei ist in einfachster Weise vorgesehen, daß die Temperaturwähleinrichtung zwei Wahltasten aufweist, daß stets nur eine Wahltaste die Steuerschaltung ansteuert und daß die Steuerschaltung in Abhängigkeit von der Ansteuerung durch die eine oder andere Wahltaste die zugehörige Gar- bzw. Kochtemperatur einregelt, wofür die verschiedensten konstruktiven Ausgestaltungen und Kopplungen der Wahltasten zur Verfügung stehen.

Nach einer weiteren vorteilhaften Ausgestaltung ist vorgesehen, daß mittels des Betriebsartenschalters zwei Betriebsarten vorgebbar sind, daß bei der ersten Betriebsart die Steuerschaltung nach Ablauf der vorgegebenen Gar- bzw. Kochzeit ein Anzeigesignal abgibt und daß bei der zweiten Betriebsart die Steuerschaltung die vorzeitige Abschaltung des Heizelementes zur Einhaltung der vorgegebenen Gar- bzw. Kochzeit im Dampfdruckkochgefäß einleitet und erst beim Unterschreiten der Verdampfungstemperatur des Wassers ein Anzeigesignal abgibt.

Bei der ersten Betriebsart kann das unter Druck stehende Dampfdruckkochgefäß sofort nach der abgelaufenen Gar- bzw. Kochzeit vom Heizelemenet genommen werden, wenn vorher die Schaltmaßnahme durchgeführt wurde. Bei dem vom Heizelement entfernten Dampfdruckkochgefäß wird bei der bekannten Vorrichtung in bekannter Weise eine automatische Abschaltung des Systems und eine Störungsmeldung erfolgen. Dies wird durch die Einführung der neuen Betriebsart dadurch verhindert, daß die Steuerschaltung für die Dauer der zusätzlichen Schaltmaßnahmen die Abgabe einer Störungsmeldung durch die Steuerschaltung unterbindet. Das unter Druck stehende Dampfdruckkochgefäß kann in bekannter Weise abgekühlt und danach zum Eingeben von weiterem Kochgut geöffnet werden.

Als besonders vorteilhaft hat sich eine Ausgestaltung erwiesen, die dadurch gekennzeichnet ist, daß die Steuerschaltung akustische Anzeigesignale abgibt.

Eine zwangsweise Einbeziehung der neuen Betriebsart in die unterschiedlichen Betriebsarten für den Gar- bzw. Kochvorgang ergibt sich in einfachster Weise dadurch, daß die Schaltmaßnahmen über eine weitere Schaltstellung des Betriebsartenschalters der Steuerschaltung zuführbar sind. Dabei kann ein als Drehschalter mit drei Schaltstellungen ausgebildeter Betriebsartenschalter verwendet werden. Es können auch drei Drucktasten verwendet werden, von denen sich durch entsprechende Ausgestaltung und Kopplung jeweils nur eine in der Einschaltstellung befindet.

Für die Einleitung einer nachfolgenden Gar- bzw. Kochphase ist nach einer Ausgestaltung vorgesehen, daß nach jeder zusätzlichen Schaltmaßnahme über das Zeitglied in die Steuerschaltung eine neue Gar- bzw. Kochzeit eingebbar ist und daß der Steuerschaltung mit der Verstellung des Betriebsartenschalters in die entsprechende Schaltstellung wieder eine der Betriebsarten anzeigbar ist bzw. daß die nachfolgende Gar- bzw. Kochphase mit derselben Gar- bzw. Kochtemperatur oder durch Betätigung der zugeordneten Wahltaste der Temperaturwähleinrichtung mit reduzierter Gar- bzw. Kochtemperatur durchführbar ist.

Da mit der Zugabe von weiterem Kochgut eine Vergrößerung der Trägheit des Systems verbunden ist, sieht eine weitere Ausgestaltung zur Energieeinsparung vor, daß der Steuerschaltung mit der zusätzlichen Schaltmaßnahme über eine Zusatzschaltung ein Zusatzsignal zuführbar ist, das zu einer Vergrößerung der aus den Werten der Aufheizphase ermittelten Zeitspanne für die vorzeitige Abschaltung des Heizelementes führt.

Die Erfindung wird anhand der Zeichnungen an einem Ausführungsbeispiel der Vorrichtung mit verschiedenen Betriebsarten näher erläutert. Es zeigt:

Fig. 1 die Temperatur-Zeit-Kennlinie bei einem in zwei Gar- bzw. Kochphasen unterteilten Gar- bzw. Kochvorgang, wobei die erste Gar- bzw. Kochphase nach einer ersten Betriebsart und die zweite Gar- bzw. Kochphase nach einer zweiten Betriebsart ablaufen,

Fig. 2 die Temperatur-Zeit-Kennlinie bei einem in zwei Gar- bzw. Kochphasen unterteilten Gar- bzw. Kochvorgang, bei dem beide Gar- bzw. Kochphasen in der zweiten, energiesparenden Betriebsart ablaufen, und

Fig. 3 ein Block-Schaltbild der beanspruchten Vorrichtung.

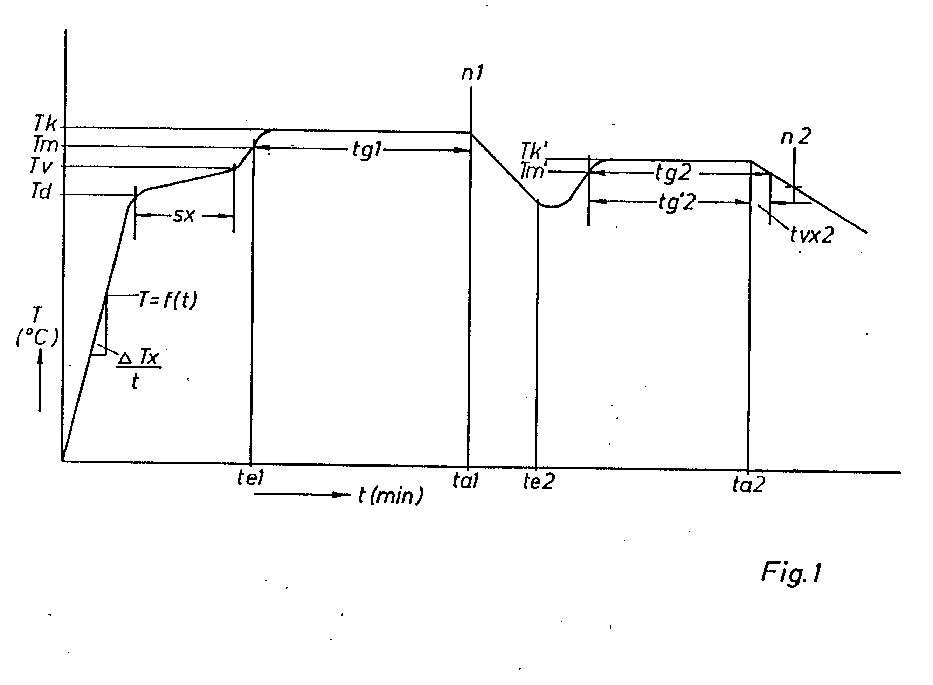

Die Temperatur-Zeit-Kennlinie $T = f(t)$ nach Fig. 1 zeigt einen Gar- bzw. Kochvorgang, der in zwei Gar- bzw. Kochphasen abläuft. Diese Temperatur-Zeit-Kennlinie $T = f(t)$ ist abhängig von der Art und der Menge des Kochgutes in dem aufgeheizten Dampfdruckkochgefäß. Dabei geben der Anstieg $\Delta Tx/t$ der Temperatur-Zeit-Kennlinie in der Aufheizphase und die Zeitdauer sx, die vom Erreichen der Temperatur Td des Beginns der Dampfphase von ungefähr 90 °C bis zum Erreichen der Verdampfungstemperatur Tv des Wassers im Dampfdruckkochgefäß von ungefähr 100 °C verstreicht, Aufschluß über die Art und Menge des Kochgutes im Dampfdruckkochgefäß und damit über die Trägheit, d. h. die Zeitkonstante, des gesamten Systems. Nach dem Abschalten des Heizelementes fällt aufgrund dieser Trägheit des Systems die Temperatur im Dampfdruckkochgefäß mehr oder weniger schnell ab, so daß also noch mehr oder weniger lange die für das Garen bzw. Kochen ausreichende Temperatur im Dampfdruckkochgefäß herrscht. Mit den in der Aufheizphase ermittelten Werten $\Delta Tx/t$ und sx kann Rückschluß auf die zu erwartende Abkühlphase gezogen und das Heizelement H vorzeitig abgeschaltet werden, um im Dampfdruckkochgefäß nur für die vorgegebene Gar- bzw. Kochzeit die entsprechende Gar- bzw. Kochtemperatur Tk einzuhalten. Die Abschaltung des Heizelementes H erfolgt dabei um so früher, je größer die zu erwartende Abkühlphase ist. Diese Abkühlphase ist um so größer, je kleiner der ermittelte Anstieg $\Delta Tx/t$ und je größer die ermittelte Zeitdauer sx sind.

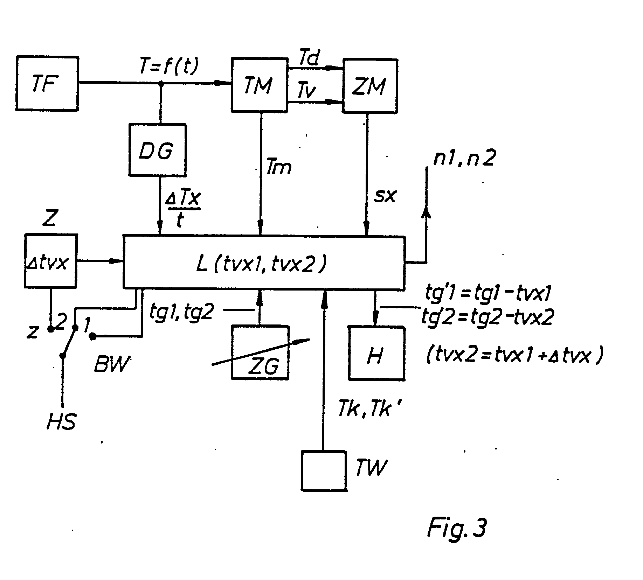

Bei der in Fig. 1 dargestellten Temperatur-Zeit-Kennlinie $T = f(t)$ wird nach dem Überschreiten der Verdampfungstemperatur Tv des Wassers im Dampfdruckkochgefäß bei einer Temperatur Tm mit der Abmessung der vorgegebene Gar- bzw. Kochzeit tgl begonnen, wie der Zeitpunkt tel auf der Zeitkoordinate zeigt. Die Gar- bzw. Kochtemperatur Tk wird auf eine Temperatur geregelt, die größer ist als die Temperatur Tm. Die Temperatur Tm braucht nur wenige °C unter der Gar- bzw. Kochtemperatur Tk zu liegen, die für Schnellgaren bzw. -kochen auf z. B. 117 °C eingeregelt werden kann. Ist die vorgegebene Gar- bzw. Kochzeit tgl abgelaufen, dann gibt die Steuerschaltung L nach Fig. 3 ein vorzugsweise akustisches Anzeigesignal n1 ab. Wie der Zeitpunkt tal anzeigt, kann dabei auch das Heizelement H abgeschaltet werden. Die Temperatur im Dampfdruckkochgefäß nimmt dann ab. Wird nach dem Zeitpunkt tal das Dampfdruckkochgefäß vom Heizelement H genommen, dann wird vorher die zusätzliche Schaltmaßnahme z der Steuerschaltung L nach Fig. 3 zugeführt.

Die Temperatur wird im bzw. am Dampfdruckkochgefäß mittels eines Temperaturfühlers TF erfaßt. Der Temperaturfühler TF gibt ein Ausgangssignal ab, das der Temperatur im Dampfdruckkochgefäß proportional ist und auch dem Verlauf der Temperatur-Zeit-Kennlinie T = f(t) entspricht. Mittels eines Differenzgliedes DG wird aus dem Ausgangssignal des Temperaturfühlers TF ein den Anstieg Tx/t kennzeichnendes erstes Auswertesignal gewonnen. Außerdem steuert das Ausgangssignal des Temperaturfühlers TF die Temperaturmeßeinrichtung TM, die beim Auftreten der Temperatur Td die Zeitmeßeinrichtung ZM ansteuert. Die Zeitmeßeinrichtung ermittelt die Zeitdauer sx, die bis zum Erreichen der Temperatur Tv verstreicht, die der Zeitmeßeinrichtung ZM von der Temperaturmeßeinrichtung TM mitgeteilt wird. Die Zeitmeßeinrichtung ZM gibt ein die Zeitdauer sx kennzeichnendes Signal an die Steuerschaltung L, der auch von dem Differenzglied DG das den Anstieg Tx/t der -Temperatur-Zeit-Kennlinie T = f(t) kennzeichnende erste Auswertesignal zugeführt wird. Die Steuerschaltung L leitet aus diesen Signalen unter Berücksichtigung der festen Größen des Systems eine Zeitspanne ab, um die die vorgegebene Gar- bzw. Kochzeit tg1 zur vorzeitigen Abschaltung des Heizelementes verkürzt werden kann, wenn man die Trägheit des Systems zum energiesparenden Garen bzw. Kochen ausnützen will.

Beim Ausführungsbeispiel nach Fig. 1 wird in der Betriebsart 1 gearbeitet. Der Betriebsartenschalter BW steht in der Schaltstellung 1. Daraus leitet die Steuerschaltung L ab, daß der Gar- bzw. Kochvorgang als Schnellgar- bzw. Schnellkochvorgang ablaufen soll. Die Temperatur Tk wird mit etwa 117 °C vorgegeben. Die Temperaturwähleinrichtung TW hat vorzugsweise zwei Wahltasten, die den Temperaturen Tk und Tk' zugeordnet sind. Die Temperatur Tk' liegt bei etwa 104 °C und führt zu einem Biogaren des Kochgutes.

Ist die Betriebsart 1 und die Temperatur Tk vorgegeben, dann wird bei der über das Zeitglied ZG vorgegebenen Gar- bzw. Kochzeit tg1 das Anzeigesignal n1 abgegeben, wenn die Zeitmeßeinrichtung ZM den Ablauf der Gar- bzw. Kochzeit tgl anzeigt.

Ist der Betriebsartenschalter BW in die Schaltstellung z gebracht, dann kann das Dampfdruckkochgefäß vom Heizelement H abgenommen werden. Dabei wird über den Schaltkreis Z ein Zusatzsignal Δtvx an die Steuerschaltung L gegeben, das zur Speicherung der Werte Tx/t und sx bis zur endgültigen Abschaltung des Systems führt. Die Steuerschaltung L hält diese Werte fest und zwar in der für eine vorzeitige Abschaltung des Heizelementes entsprechenden Form.

Wird das Dampfdruckkochgefäß wieder auf das Heizelement H gesetzt, dann wird der Betriebsartenschalter BW in die Schaltstellung 2 gebracht, die der Steuerschaltung L die Betriebsart 2 anzeigt, in der energiesparend weitergegart bzw. weitergekocht werden soll. Dazu ist über das Zeitglied ZG die neue Gar- bzw. Kochzeit tg1 und über die Temperaturwähleinrichtung TW die neue Gar- bzw. Kochtemperatur Tk' einzugeben. Die zweite Gar- bzw. Kochphase erfolgt im Biogaren. Die Steuerschaltung L verarbeitet die gespeicherten Werte ΔTx/t und sx, sowie das Zusatzsignal Δtvx der Zusatzschaltung Z zu einer Zeitspanne tvx2, die sich in einer vorzeitigen Abschaltung des Heizelementes H auswirkt. Der Abschaltzeitpunkt ta2 des Heizelementes liegt um die Zeitspanne tvx2 vor dem Ende der Gar- bzw. Kochzeit tg2, wie mit der Zeitdauer tg'2 angezeigt ist, die vom Beginn der Abmessung der vorgegebenen Gar- bzw. Kochzeit tg2 bis zur Abschaltung des Heizelementes H verstreicht. Das Anzeigesignal n2 gibt die Steuerschaltung L bei der Betriebsart 2 erst nach dem Unterschreiten der Temperatur Tv ab. Der Druck im Dampfdruckkochgefäß ist dabei soweit abgebaut, daß das Dampfdruckkochgefäß gefahrlos geöffnet werden kann.

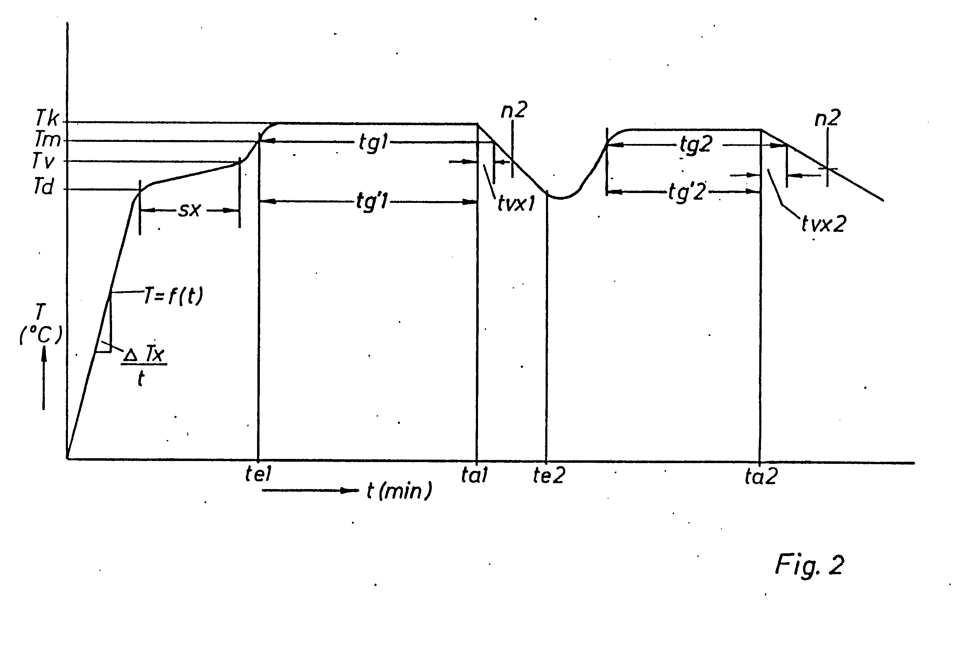

Bei dem Ausführungsbeispiel nach Fig. 2 werden in beiden Gar- bzw. Kochphasen des Gar- bzw. Kochvorganges die Werte ΔTx/t und sx der Aufheizphase zur vorzeitigen Abschaltung des Heizelementes H ausgenützt. In der ersten Gar- bzw. Kochphase wird die vorgegebene Gar- bzw. Kochzeit tg1 im Dampfdruckkochgefäß eingehalten, wenn die Abschaltung des Heizelementes H zum Zeitpunkt tal erfolgt, der um die Zeitspanne tvx1 vorverlegt ist. Die Zeitspanne tg'1 leitet sich aus tg1-tvx1 ab. Die Zeitspanne tvx1 ermittelt die Steuerschaltung L aus den Werten ΔTx/t und sx der Aufheizphase.

Die zusätzliche Schaltmaßnahme z führt zur Speicherung des für die Zeitspanne tvx1 relevanten Wertes aus der Aufheizphase und zwar bis zur endgültigen Abschaltung des Systems. Gleichzeitig wird auch die Abschaltung des Heizelementes H für die Dauer der zusätzlichen Schaltmaßnahme z beibehalten und die Abgabe einer Störungsmeldung durch die Steuerschaltung L unterbunden, wenn das Dampfdruckkochgefäß von dem Heizelement entfernt wird.

Nach dem Zurückstellen des Dampfdruckkochgefäßes auf das Heizelement H wird der Betriebsartenschalter BW wieder in die Schaltstellung 2 gestellt, in der er schon während der ersten Gar- bzw. Kochphase war. Auch die Temperaturwähleinrichtung TW braucht keine neue Einstellung, da die Gar- bzw. Kochtemperatur Tk auch in der zweiten Gar- bzw. Kochphase eingeregelt werden soll. Lediglich über den Zeitgeber ZG ist eine neue Gar- bzw. Kochzeit tg2 einzugeben. Die Zeitspanne tvx2 zur vorzeitigen Abschaltung des Heizelementes H ermittelt diesmal die Steuerschaltung aus den Werten ΔTx/t, sx und Δtvx, da

durch die Zugabe von Kochgut die Trägheit des Systems vergrößert wird. Das Zusatzsignal Δtvx ist dabei als mittlerer Wert fest angesetzt, da aus der Temperatur-Zeit-Kennlinie T = f(t) in diesem Bereich keine Aussage über die Art und Menge des zugegebenen Kochgutes mehr ableitbar ist.

Hat die Steuerschaltung L im Zeitpunkt ta2 das Heizelement H abgeschaltet, wobei sich die Zeitspanne tg'2 aus tg2-tvx2 und tvx2 aus tvx1 + Δtvx ergeben, dann sinkt die Temperatur im Dampfdruckkochgefäß wieder unter die Verdampfungstemperatur Tv und die Steuerschaltung L zeigt mit dem Anzeigesignal n2 das Ende des Gar- bzw. Kochvorganges an. Bei dieser Betriebsart 2 kann das Dampfdruckkochgefäß sofort geöffnet werden, da der Druck bereits abgebaut ist.

## Patentansprüche

1. Vorrichtung zum Steuern des Gar- bzw. Kochvorganges in einem über ein elektrisches Heizelement (H) mit Steuerschaltung (L) aufheizbaren und mit Wasser und/oder Kochgut gefüllten Dampfdruckkochgefäß, bei der die Temperatur im bzw. am Dampfdruckkochgefäß mittels eines Temperaturfühlers (TF) und über eine Temperaturmeßeinrichtung (TM) der Steuerschaltung (L) zur Regelung der Heizleistung des Heizelementes (H) zugeführt wird, bei der mittels eines einstellbaren Zeitgliedes (ZG) eine Gar- bzw. Kochzeit (tg1, tg2) vorgebbar ist, das erst mit dem Erreichen einer vorgegebenen Temperatur (Tm) die zwischen der vorgegebenen Gar- bzw. Kochtemperatur und der Verdampfungstemperatur (Tv) des Wassers im Dampfdruckkochtopf liegt, mit der Abmessung der vorgegebenen Gar- bzw. Kochzeit (tg1, tg2) beginnt, bei der in der Aufheizphase mittels eines Differenziergliedes (DG) der Anstieg (ΔTx/t) der Temperatur-Zeit-Kennlinie [T = f(t)] des gesamten Systems erfaßt wird, bei der mittels einer Zeitmeßeinrichtung (ZM) die Zeitdauer (sx), die vom Erreichen der Temperatur (Td) des Beginns der Dampfphase bis zum Erreichen der Verdampfungstemperatur (Tv) des Wassers im Dampfdruckkochgefäß verstreicht, gemessen wird und bei der die vorgegebene Gar- bzw. Kochzeit (tg1, tg2) in Abhängigkeit von dem erfaßten Anstieg (ΔTx/t) der Temperatur-Zeit-Kennlinie [T = f(t)] und/oder der ermittelten Zeitdauer (sx) durch vorzeitige Abschaltung des Heizelementes (H) im Dampfdruckkochgefäß eingehalten wird, wobei die Abschaltung um so früher erfolgt, je kleiner der erfaßte Anstieg (ΔTx/t) und/oder je größer die ermittelte Zeitdauer (sx) sind, dadurch gekennzeichnet,

daß über einen Betriebsartenschalter (BW) der Steuerschaltung (L) Schaltmaßnahmen (z) zugeführt sind, die den Gar- bzw. Kochvorgang in mehrere, aufeinander folgende Gar- bzw. Kochphasen unterteilen, daß die Steuerschaltung (L) für die Dauer dieser Schaltmaßnahmen (z) durch Abschaltung des Heizelementes (H) den Gar- bzw. Kochvorgang unterbricht, daß die Steuerschaltung (L) nach der ersten Gar- bzw. Kochphase eines Gar- bzw. Kochvorganges den erfaßten Anstieg (ΔTx/t) der Temperatur-Zeit-Kennlinie [T = f(t)] und die ermittelte Zeitdauer (sx) aus der Aufheizphase bis zur endgültigen Abschaltung des Systems speichert, und

daß über diese in der Steuerschaltung (L) gespeicherten Werte (ΔTx/t und sx) auch in nachfolgenden Gar- bzw. Kochphasen das Heizelement (H) zur Einhaltung der jeweils vorgegebenen Gar- bzw. Kochzeit (tg1, tg2) im Dampfdruckkochgefäß vorzeitig abschaltbar ist.

2. Vorrichtung nach Anspruch 1, dadurch gekennzeichnet, daß mittels einer Temperaturwähleinrichtung (TW) eine Temperatur für Schnellgaren bzw. -kochen (Tk z. B. 177 °C) und eine Temperatur für Biogaren (Tk' z. B. 104 °C) vorgebbar sind.

3. Vorrichtung nach Anspruch 2, dadurch gekennzeichnet, daß die Temperaturwähleinrichtung (TW) zwei Wahltasten aufweist, daß stets nur eine Wahltaste die Steuerschaltung (L) ansteuert und daß die Steuerschaltung (L) in Abhängigkeit von der Ansteuerung durch die eine oder andere Wahltaste die zugehörige Gar- bzw. Kochtemperatur (Tk, Tk') einregelt.

4. Vorrichtung nach einem der Ansprüche 1 bis 3, dadurch gekennzeichnet, daß mittels des Betriebsartenschalters (BW) zwei Betriebsarten (1, 2) vorgebbar sind, daß bei der ersten Betriebsart (1) die Steuerschaltung (L) nach Ablauf der vorgegebenen Gar- bzw. Kochzeit (tg1) ein Anzeigesignal (n1) abgibt und daß bei der zweiten Betriebsart (2) die Steuerschaltung (L) die vorzeitige Abschaltung des Heizelementes (H) zur Einhaltung der vorgegebenen Gar- bzw. Kochzeit (tg2) im Dampfdruckkochgefäß einleitet und erst beim Unterschreiten der Verdampfungstemperatur (Tv) des Wassers ein Anzeigesignal (n2) abgibt.

5. Vorrichtung nach Anspruch 4, dadurch gekennzeichnet, daß die Steuerschaltung (L) akustische Anzeigesignale (n1, n2) abgibt.

6. Vorrichtung nach Anspruch 4, dadurch gekennzeichnet, daß die zusätzlichen Schaltmaßnahmen (z) über eine weitere Schaltstellung des Betriebsartenschalters (BW) der Steuerschaltung (L) zuführbar sind.

7. Vorrichtung nach Anspruch 6, dadurch gekennzeichnet, daß der Betriebsartenschalter (BW) als Drehschalter mit drei Schaltstellungen ausgebildet ist.

8. Vorrichtung nach Anspruch 6, dadurch gekennzeichnet, daß der Betriebsartenschalter (BW) drei Drucktasten aufweist, von denen sich jeweils nur eine in der Einschaltstellung befindet.

9. Vorrichtung nach einem der Ansprüche 1 bis 8, dadurch gekennzeichnet, daß die Steuerschaltung (L) für die Dauer der zusätzlichen Schaltmaßnahmen (z) die Abgabe einer Störungsmeldung unterbindet.

10. Vorrichtung nach einem der Ansprüche 1 bis 9, dadurch gekennzeichnet, daß nach jeder zusätzlichen Schaltmaßnahme (z) über das Zeitglied (ZG) in die Steuerschaltung (L) eine neue Gar- bzw. Kochzeit (z. B. tg2) eingebbar ist, und daß der Steuerschaltung (L) mit der Verstellung des Betriebsartenschalters (BW) in die entsprechende Schaltstellung wieder eine der Betriebsarten (1, 2) anzeigbar ist.

11. Vorrichtung nach Anspruch 10, dadurch gekennzeichnet, daß die nachfolgende Gar- bzw. Kochphase mit derselben Gar- bzw. Kochtemperatur (Tk) oder durch Betätigung der zugeordneten Wahltaste der Temperaturwähleinrichtung (TW) mit reduzierter Gar- bzw. Kochtemperatur (Tk') durchführbar ist.

12. Vorrichtung nach einem der Ansprüche 1 bis 11, dadurch gekennzeichnet, daß der Steuerschaltung (L) mit der zusätzlichen Schaltmaßnahme (z) über eine Zusatzschaltung (Z) ein Zusatzsignal (Δtvx) zuführbar ist, das zu einer Vergrößerung der aus den Werten (ΔTx/t und sx) der Aufheizphase ermittelten Zeitspanne (tvx1, tvx2) für die vorzeitige Abschaltung des Heizelementes (H) führt.

## Claims

1. Device for controlling the simmering or cooking process in a pressure-cooking vessel filled with water and/or food, which can be heated up by means of an electrical heating element (H) with control circuit (L), whereby the temperature in or on the pressure-cooking vessel is supplied to the control circuit (L) using a temperature sensor (TF) and via a temperature measuring unit (TM) for the regulation of the heating output of the heating element (H), whereby a simmering or cooking time (tg1, tg2) is set by means of an adjustable timing element (ZG), which only begins to measure the set simmering or cooking time (tg1, tg2), when a predetermined temperature (Tm) that lies between the set simmering or cooking time and the vaporizing temperature (Tv) of water in the pressure-cooking vessel is reached, whereby the rise (ΔTx/t) of the temperature-time characteristic curve [T = f(t)] of the whole system is established in the heating up phase using a differentiating element (DG), during which the time duration (sx) which elapses from reaching the temperature (Td) that marks the start of the steam phase to reaching the vaporizing temperature (Tv) of the water in the pressure-cooking vessel, is measured using a time measuring device (ZM) and during which the predetermined simmering and cooking time (tg1, tg2) is kept dependant on the established rise (ΔTx/t) of the temperature-time characteristic curve [T = f(t)] and/or the evaluated duration (sx) caused by the premature switching off of the heating element in the pressure-cooking vessel, whereby the switching off happens that much sooner, the smaller the established rise (ΔTx/t) and/or larger the evaluated duration (sx), characterised by the fact, that switch measures (z) are fed to the control circuit (L) via an operating mode switch (BW), which split the simmering or cooking process up into several consecutive simmering or cooking phases, that the control circuit (L) interrupts the simmering or cooking process for the duration of the switch measures (z) by switching off the heating element (H), that the control circuit (L) stores the established rise (ΔTx/t) of the temperature-time characteristic curve [T = f(t)] and the evaluated duration (sx) from the heating-up phase to the eventual switching off of the system, after the first simmering or cooking phase of a simmering or cooking process and that the heating element (H), which retains the respectively predetermined simmering or cooking times (tg1, tg2) in the pressure cooking vessel can be switched off in time, via the values (ΔTx/t and sx) stored in the circuit control (L), even in the following simmering or cooking phases.

2. Device according to claim 1, characterised by the fact, that one temperature for quick simmering or cooking (Tk e.g. 117 °C) and one temperature for bio-simmering (Tk' e. g. 104 °C) can be set via a temperature selection device (TW).

3. Device according to claim 2, characterised by the fact, that the temperature selection device (TW) has two selection buttons, that always only one selection button controls the control circuit and that the control circuit (L) sets the respective simmering or cooking temperature (Tk, Tk') depending on the control executed by one or other of the selection buttons.

4. Device according to one of the claims 1 to 3, characterised by the fact, that two operating modes (1, 2) can be selected using the operating mode switch (BW), that the control circuit (L) emits a display signal at the of the set simmering or cooking time (tg1) in the first operating mode (1) and that in the second operating mode (2), the control circuit (L) initiates the premature switching off of the heating element (H) for the retention of the predetermined simmering or cooking time (tg2) in the pressure cooking vessel and emits a display signal (n2) only when the vaporizing temperature (Tv) of the water is fallen short of.

5. Device according to claim 4, characterised by the fact, that the control circuit (L) emits acoustic display signals (n1, n2).

6. Device according to claim 4, characterised by the fact, that the additional switch measures (z) can be fed to the control circuit (L) via a further switch position of the operating mode switch (BW).

7. Device according to claim 6, characterised by the fact, that the operating mode switch (BW) is a rotary switch with three switch positions.

8. Device according to claim 6, characterised by the fact, that the operating mode switch (BW) has three push buttons, of which only one can be in the switched on position at one time.

9. Device according to one of the claims 1 to 8, characterised by the fact, that the control circuit (L) prevents the output of a fault message for the duration of the additional switch measures (z).

10. Device according to one of the claims 1 to 9, characterised by the fact, that a new simmering or cooking time (e. g. tg2) can be entered after every additional switch measure (z) via a timing element (ZG) in the control circuit (L), and that one of the operating modes (1, 2) of the control circuit (L) can be displayed by adjusting the operating mode switch (BW) to the respective switch position.

11. Device according to claim 10, characterised by the fact, that the following simmering or cooking phase can be carried out with the same simmering or cooking temperature (Tk) or at a reduced simmering or cooking time (Tk'), by activating the respective selection button on the temperature selection assembly (TW).

12. Device according to one of the claims 1 to 11, characterised by the fact, that an additional signal (Δtvx) can be fed to the control circuit (L) with the additional switch measures (z) via an additional circuit (z), which leads to an increase in the time duration (tvx1, tvx2) evaluated from the values (ΔTx/t and sx) of the heating up phase and thus to the premature switching off of the heating element (H).

## Revendications

1. Dispositif pour commander le processus de cuisson « juste à point » ou de cuisson « bien cuit » dans une cocotte-minute que l'on peut chauffer au moyen d'un élément chauffant électrique (H) avec circuit de commande (L) et qui est remplie d'eau et/ou d'un mets à cuire, dispositif dans lequel on amène la température régnant dans ou sur la cocotte-minute, au moyen d'un détecteur (TF) de température, et par l'intermédiaire d'un dispositif (TM) de mesure de la température, au circuit de commande (L) prévu pour la régulation de la puissance de chauffage de l'élément chauffant (H), dans lequel on peut prescrire une durée (tg1, tg2) de cuisson « juste à point » ou de cuisson « bien cuit », au moyen d'un élément temporisé (ZG) réglable, qui ne commence le décompte de la durée (tg1, tg2) de cuisson « juste à point » ou de cuisson « bien cuit » prescrite que lorsque l'on a atteint une température prescrite (Tm) qui se situe entre la température de cuisson « juste à point » ou « bien cuit » prescrite et la température (tv) de vaporisation de l'eau dans la cocotte-minute, dans lequel, au cours de la phase de chauffage, on décèle au moyen d'un élément différentiel (DG), la pente (ΔTx/t) de la courbe caractéristique température-temps [T = f(t)] de l'ensemble du système, dans lequel on mesure, au moyen d'un dispositif (ZM) de mesure du temps, la durée (sx) qui s'écoule entre le moment où l'on atteint la température (Td) du début de la phase vapeur et le moment où l'on atteint la température (Tv) de vaporisation de l'eau dans la cocotte-minute, et dans lequel on se conforme à la durée (tg1, tg2) de cuisson « juste à point » ou « bien cuit » prescrite en fonction de la pente (ΔTx/t) décelée de la courbe caractéristique température-temps [T = f(t)] et/ou de la durée (sx) déterminée, en mettant prématurément hors circuit l'élément chauffant (H) dans la cocotte-minute, étant précisé que cette mise hors circuit se fait d'autant plus tôt que la pente (ΔTx/t) décelée est plus petite et/ou que la durée (sx) déterminée est plus grande, dispositif caractérisé,

en ce que l'on amène au circuit de commande (L), par l'intermédiaire d'un sélecteur de mode (BW), des dispositions (z) qui sont relatives à la commutation et qui divisent le processus de cuisson « juste à point » ou « bien cuit » en plusieurs phases successives de cuisson « juste à point » ou « bien cuit »,

en ce que, après écoulement de la durée de ces dispositions (z) relatives à la commutation, le circuit de commande (L) interrompt le processus de cuisson « juste à point » ou « bien cuit » en mettant hors circuit l'élément chauffant (H), en ce qu'après la première phase de cuisson « juste à point » ou « bien cuit », le circuit de commande (L) mémorise, jusqu'à la mise hors circuit finale du système, la pente (Δtx/t) décelée de la courbe caractéristique température-temps [T = f(t)] ainsi que la durée déterminée (sx) résultant de la phase de chauffage, et

en ce que, au moyen de ces valeurs (ΔTx/t et sx) mémorisées dans le circuit de commande (L), on peut mettre prématurément hors circuit, même dans les phases de cuisson « juste à point » ou « bien cuit » qui suivent, l'élément chauffant (H) pour respecter la durée (tg1, tg2) de cuisson « juste à point » ou « bien cuit » respectivement prescrite dans la cocotte-minute.

2. Dispositif selon la revendication 1, caractérisé, en ce qu'au moyen d'un dispositif (TW) de choix de la température, on peut prescrire une température pour la cuisson « juste à point » ou « bien cuit » rapide (Tk, par exemple 117 °C) et une température pour la biocuisson « juste à point » (TK', par exemple 104 °C).

3. Dispositif selon la revendication 2, caractérisé en ce que le dispositif (TW) de choix de la température présente deux touches de choix, en ce qu'en permanence une seule touche de choix commande le circuit de commande (L), et en ce que le circuit de commande (L) régule la température appropriée de cuisson « juste à point » ou « bien cuit » (Tk, Tk') en fonction du pilotage par l'une ou par l'autre touche de choix.

4. Dispositif selon l'une des revendications 1 à 3, caractérisé en ce qu'au moyen du sélecteur de mode (BW), on peut prescrire deux modes (1, 2), en ce que dans le cas du premier mode (1), le circuit de commande (L) émet un signal indicateur (n1) après écoulement de la durée prescrite (tg1) de la cuisson « juste à point » ou « bien cuit », et en ce que dans le cas du second mode (2), le circuit de commande (L) provoque la mise hors circuit prématurée de l'élément chauffant (H), pour se conformer à la durée prescrite (tg2) de cuisson « juste à point » ou « bien cuit » dans la cocotte-minute et n'émet un signal indicateur (n2) que lorsque l'on passe en dessous de la température (Tv) de vaporisation de l'eau.

5. Dispositif selon la revendication 4, caractérisé, en ce que le circuit de commande (L) émet des signaux indicateurs acoustiques (n1, n2).

6. Dispositif selon la revendication 4, caractérisé en ce que l'on peut amener au circuit de commande (L) les dispositions complémentaires (z) relatives à la commutation au moyen d'une autre position du sélecteur de mode (BW).

7. Dispositif selon la revendication 6, caractérisé en ce que le sélecteur de mode (BW) est conçu sous forme de sélecteur tournant à trois positions.

8. Dispositif selon la revendication 6, caractérisé en ce que le sélecteur de mode (BW) présente trois touches à pousser, dont une seule se trouve chaque fois dans la position de mise en circuit.

9. Dispositif selon l'une des revendications 1 à 8, caractérisé en ce que le circuit de commande (L) interrompt l'émission d'une annonce d'incident pendant la durée des dispositions complémentaires (z) relatives à la commutation.

10. Dispositif selon l'une des revendications 1 à 9, caractérisé, en ce qu'après chaque disposition complémentaire (z) relative à la commutation, on peut entrer dans le circuit de commande (L), par l'intermédiaire de l'élément temporisé (ZG), une nouvelle durée (par exemple tg2) de cuisson « juste à point » ou « bien cuit », et en ce qu'en mettant le sélecteur de mode (BW) sur la position appropriée, on peut indiquer à nouveau au circuit de commande (L) l'un des modes (1, 2).

11. Dispositif selon la revendication 10, caractérisé en ce que l'on peut conduire la phase suivante de cuisson « juste à point » ou « bien cuit » à la même température (Tk) ou, en manœuvrant la touche de choix appropriée du dispositif (TW) de choix de la température, à une température réduite (Tk').

12. Dispositif selon l'une des revendications 1 à 11, caractérisé, en ce qu'avec la disposition complémentaire (z) relative à la commutation, on peut amener au circuit de commande (L), par l'intermédiaire d'un circuit complémentaire (Z), un signal complémentaire ($\Delta$tvx) qui conduit à un accroissement de la durée (tvx1, tvx2), établie à partir des valeurs ($\Delta$Tx/t et sx) de la phase de chauffage, pour la mise hors circuit prématurée de l'élément chauffant (H).

Fig.1

EP 0 188 714 B1

Fig. 2

EP 0 188 714 B1

Fig. 3